# FASCICULE DE BREVET EUROPEEN

(11) **EP 2 133 245 B1**
(45) Date de publication et mention de la délivrance du brevet: **19.01.2011**
(21) Numéro de dépôt: 09290419.2
(22) Date de dépôt: 08.06.2009
(51) Int. Cl.: B60R 21/02, B60R 7/02

(54) **Procédé de cloisonnement de la face avant d'un compartiment à bagage d'un modèle donné de véhicule automobile**
Verfahren zur Abtrennung der Vorderseite in einem Laderaum eines Kraftfahrzeuges
Method for having a partition at the front part of a luggage compartment in a vehicle

(30) Priorité: 12.06.2008 FR 0803282
(43) Date de publication de la demande: 16.12.2009
(73) Titulaire: Centre d'Etude et de Recherche pour l'Automobile (CERA), 51100 Reims (FR)
(72) Inventeur: Georges, Laurent, 08190 Roizy (FR); Patte, Damien, 51490 Epoye (FR)
(74) Mandataire: Sayettat, Julien Christian

(56) Documents cités:
- DE-A1- 4 322 936
- FR-A- 2 821 805
- US-A- 3 666 313
- US-A- 4 015 875

## Description

L'invention concerne un procédé de cloisonnement de la face avant d'un compartiment à bagage de véhicule automobile.

Un procédé cloisonnement comme décrit est comme dans FR2821805.

II est connu de mettre en oeuvre un procédé de cloisonnement de la face avant d'un compartiment à bagage d'un modèle donné de véhicule automobile, ledit modèle donné appartenant à une gamme d'une pluralité de modèles, ladite face avant présentant une largeur variable selon les modèles, ledit compartiment étant délimité sur ladite face avant par au moins un dossier de siège, ledit procédé comprenant les étapes suivantes :
- prévoir une armature de dossier spécifique à chaque modèle,
- associer à ladite armature des moyens de montage à la structure du véhicule,
- monter ladite armature dans le modèle correspondant,
- intégrer audit dossier un panneau de recouvrement de l'arrière de ladite armature, de sorte que ledit panneau forme au moins une partie de ladite face avant dudit compartiment.

Le fait de prévoir une armature de dossier spécifique à chaque modèle implique des investissements considérables, lesdites armatures étant usuellement à base de métal, puisqu'il faut prévoir des outillages spécifiques à chaque armature.

En outre, les armatures doivent répondre à des contraintes de sécurité drastiques, notamment par rapport aux projections de bagages, ce qui oblige à réaliser des validations très sévères et coûteuses.

L'invention a pour but de pallier ces inconvénients.

A cet effet, l'invention propose un procédé de cloisonnement de la face avant d'un compartiment à bagage d'un modèle donné de véhicule automobile, ledit modèle donné appartenant à une gamme d'une pluralité de modèles, ladite face avant présentant une largeur variable selon les modèles, ledit compartiment étant délimité sur ladite face avant par au moins un dossier de siège, ledit procédé étant **caractérisé en ce qu**'il comprend les étapes de :
- prévoir une armature de dossier commune à ladite gamme, ladite armature étant agencée de sorte à pouvoir être montée dans le modèle présentant la face avant de largeur minimale,
- associer à ladite armature des moyens de montage solidairement à la structure du véhicule, lesdits moyens étant adaptés audit modèle donné,
- monter ladite armature dans ledit modèle donné, ladite armature laissant au moins une zone de ladite face avant à découvert, ladite zone étant contiguë à un bord vertical de ladite armature,
- intégrer audit dossier un panneau de recouvrement de l'arrière de ladite armature, ledit panneau dépassant latéralement de ladite armature de sorte à recouvrir ladite zone.

Dans cette description, les termes de positionnement dans l'espace (avant, latéral, hauteur, largeur,...) sont pris en référence aux repères du véhicule.

Lorsque l'on parle d'un panneau de recouvrement, on entend un panneau tel qu'une coque rapportée, par exemple à base de feutre ou de carton, ou encore une tôle soudée à l'armature, utilisée notamment dans le cas où l'on souhaite disposer d'un envers de dossier résistant à de lourdes charges lorsque ledit dossier est rabattu pour former plan de chargement.

Le procédé proposé permet, à partir d'une armature unique, commune à tous les modèles de la gamme et validée une fois pour toutes en termes de sécurité, de réaliser le cloisonnement de la face avant d'un compartiment à bagage d'un modèle donné par ajout d'un panneau de faible coût.

On fixe sur l'armature commune, notamment par soudure, des moyens de montage adaptés au modèle donné.

Ainsi, il n'est plus nécessaire de prévoir une armature par modèle, ce qui entraîne une baisse importante des coûts de fabrication et de validation d'armature.

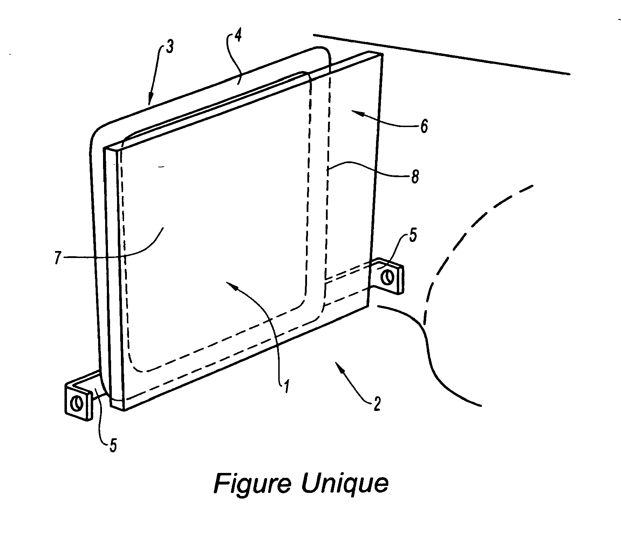

D'autres particularités et avantages de l'invention apparaîtront dans la description qui suit, faite en référence à la figure jointe qui est une vue schématique en perspective partielle d'une architecture issue du procédé selon une réalisation.

En référence à la figure, on décrit un procédé de cloisonnement de la face avant 1 d'un compartiment 2 à bagage d'un modèle donné de véhicule automobile, ledit modèle donné appartenant à une gamme d'une pluralité de modèles, ladite face avant présentant une largeur variable selon les modèles, ledit compartiment étant délimité sur ladite face avant par au moins un dossier 3 de siège, ledit procédé comprenant les étapes de :
- prévoir une armature 4 de dossier commune à ladite gamme, ladite armature étant agencée de sorte à pouvoir être montée dans le modèle présentant la face avant de largeur minimale,
- associer à ladite armature des moyens de montage 5 solidairement à la structure du véhicule, lesdits moyens étant adaptés audit modèle donné,
- monter ladite armature dans ledit modèle donné, ladite armature laissant au moins une zone 6 de ladite face avant à découvert, ladite zone étant contiguë à un bord 8 vertical de ladite armature,
- intégrer audit dossier un panneau 7 de recouvrement de l'arrière de ladite armature, ledit panneau dépassant latéralement de ladite armature de sorte à recouvrir ladite zone.

L'armature 4 est ici sous forme d'un cadre tubulaire métallique dont l'intérieur peut être quadrillé par un réseau de fils métalliques non représenté.

Les moyens de montage 5 sont sous forme de goussets dont la géométrie est adaptée au modèle donné pour permettre un positionnement correct du point H des sièges.

Le panneau 7 peut notamment être associé à l'armature 4.

Selon une réalisation, le procédé prévoit d'associer le panneau 7 par soudage à l'armature 4, ceci dans le cas où ledit panneau est une tôle.

Selon une autre réalisation, le procédé prévoit d'associer le panneau 7 à l'armature 4 par emboîtement, par le biais de clips rapportés, ceci dans le cas où ledit panneau est par exemple à base de carton ou de feutre.

Selon une réalisation, le procédé prévoit de faire dépasser le panneau 7 latéralement sur au moins la moitié de la hauteur de l'armature 4, voire sur toute sa hauteur, comme représenté ici, la géométrie de la partie dudit panneau dépassant latéralement étant fonction la forme de la zone 6 à recouvrir.

## Revendications

1. Procédé de cloisonnement de la face avant (1) d'un compartiment (2) à bagage d'un modèle donné de véhicule automobile, ledit modèle donné appartenant à une gamme d'une pluralité de modèles, ladite face avant présentant une largeur variable selon les modèles, ledit compartiment étant délimité sur ladite face avant par au moins un dossier (3) de siège, ledit procédé étant **caractérisé en ce qu'**il comprend les étapes de :
• prévoir une armature (4) de dossier commune à ladite gamme, ladite armature étant agencée de sorte à pouvoir être montée dans le modèle présentant la face avant de largeur minimale,
• associer à ladite armature des moyens de montage (5) solidairement à la structure du véhicule, lesdits moyens étant adaptés audit modèle donné,
• monter ladite armature dans ledit modèle donné, ladite armature laissant au moins une zone (6) de ladite face avant à découvert, ladite zone étant contiguë à un bord vertical (8) de ladite armature,
• intégrer audit dossier un panneau (7) de recouvrement de l'arrière de ladite armature, ledit panneau dépassant latéralement de ladite armature de sorte à recouvrir ladite zone.

2. Procédé selon la revendication 1, **caractérisé en ce qu'**il prévoit d'associer le panneau (7) à l'armature (4).

3. Procédé selon la revendication 2, **caractérisé en ce qu'**il prévoit d'associer le panneau (7) par soudage.

4. Procédé selon la revendication 2, **caractérisé en ce qu'**il prévoit d'associer le panneau (7) par emboîtement.

5. Procédé selon l'une quelconque des revendications 1 à 4, **caractérisé en ce qu'**il prévoit de faire dépasser le panneau (7) latéralement sur au moins la moitié de la hauteur de l'armature (4).

## Claims

1. Method of partitioning the front face (1) of a luggage compartment (2) of a given model of automobile vehicle, wherein said model is part of a range of a plurality of models, wherein said front face has a width that is variable according to the models, wherein said compartment is defined on said front face by at least one seat back (3), wherein said method is **characterised in that** it comprises the staps of:
- providing a seat back frame (4) that is common to said range, wherein said frame is laid out such that it may be fitted into the model with the smallest front face;
- associating to said frame assembly means (5) which are stationary to the structure of the vehicle, wherein said means are adapted to said given model;
- assembling said frame in said given model, wherein said frame leaves at least one zone (6) of said front face exposed, wherein said zone is contiguous with a vertical edge (8) of said frame;
- incorporating into said seat back a panel (7) to cover the rear of said frame, wherein said panel overlaps laterally said frame so that it covers said zone.

2. Method according to claim 1, **characterised in that** it provides for the association of the panel (7) and the frame (4).

3. Method according to claim 2, **characterised in that** it provides to associate the panel (7) by welding.

4. Method according to claim 2, **characterised in that** it provides to associate the panel (7) by interlocking.

5. Method according to any of claims 1 to 4, **characterised in that** it provides to have the panel (7) overlap laterally on at least half of the height of the frame (4).

## Patentansprüche

1. Verfahren zur Abtrennung der Vorderseite (1) in einem Laderaum (2) eines bestimmten Modells eines Kraftfahrzeugs, wobei das bestimmte Modell einer Palette einer Vielzahl von Modellen angehört, wobei die Vorderseite eine variable Breite je nach den Modellen aufweist, wobei der Raum auf der Vorderseite durch mindestens eine Sitzlehne (3) begrenzt ist, wobei das Vorfahren **dadurch gekennzeichnet ist, dass** es die folgenden Schritte umfasst:
- Vorsehen eines Rahmens (4) der Sitzlehne, der der Palette gemeinsam ist, wobei der Rahmen so angebracht ist, dass er in dem Modell montiert werden kann, das die Vorderseite mit einer minimalen Breite aufweist,
- Verbinden von Montagemitteln (5) mit dem Rahmen, fest verbunden mit der Struktur des Fahrzeugs, wobei die Mittel an das bestimmte Modell angepasst sind,
- Montieren des Rahmens in das bestimmte Modell, wobei der Rahmen mindestens einen Bereich (6) der Vorderseite unbedeckt lässt, wobei der Bereich einem senkrechten Rand (8) des Rahmens benachbart ist,
- Integrieren einer Platte (7) zur Abdeckung der Hinterseite des Rahmens in die Sitzlehne, wobei die Platte zeitlich den Rahmen üharragt, um den Bereich abzudecken.

2. Verfahren nach Anspruch 1, **dadurch gekennzeichnet, dass** es vorsieht, die Platte (7) mit dem Rahmen zu verbinden (4).

3. Verfahren nach Anspruch 2, **dadurch gekennzeichnet, dass** es vorsieht, die Platte (7) durch Schweißen zu verbinden.

4. Verfahren nach Anspruch 2, **dadurch gekennzeichnet, dass** es vorsieht, die Platte (7) durch Ineinanderfügen zu verbinden.

5. Verfahren nach einem der Ansprüche 1 bis 4, **dadurch gekennzeichnet, dass** es vorsieht, die Platte (7) seitlich auf mindestens der Hälfte der Höhe des Rahmens (4) hervorragen zu lassen.
